# EUROPÄISCHE PATENTSCHRIFT

(11) **EP 1 181 545 B1**
(45) Veröffentlichungstag und Bekanntmachung des Hinweises auf die Patenterteilung: **23.08.2006**
(21) Anmeldenummer: 00940184.5
(22) Anmeldetag: 12.05.2000
(51) Int. Cl.: G01N 29/04

(54) **VERFAHREN UND VORRICHTUNG ZUR ZUSTANDSERFASSUNG UND PRÜFUNG VON LANGGESTRECKTEN VERBINDUNGSELEMENTEN MITTELS ULTRASCHALL**
METHOD AND DEVICE FOR DETERMINING THE CONDITION OF LONGITUDINALLY STRETCHED CONNECTING ELEMENTS AND FOR TESTING THE SAME USING ULTRASOUND
PROCEDE ET DISPOSITIF POUR DETECTER PAR ULTRASONS L'ETAT D'ELEMENTS DE CONNEXION ALLONGES ET POUR LES VERIFIER

(30) Priorität: 14.05.1999 DE 19922058
(43) Veröffentlichungstag der Anmeldung: 27.02.2002
(73) Patentinhaber: Fraunhofer-Gesellschaft zur Förderung der angewandten Forschung e.V., 80686 München (DE); Innotest AG, 8360 Eschlikon (CH)
(72) Erfinder: SALZBURGER, Hans-Jürgen, D-66539 Neunkirchen (DE); NIKIFORENKO, Georg, D-66125 Dudweiler (DE); KRÖNING, Michael, D-66123 Saarbrücken (DE); KREIER, Peter, CH-8360 Eschlikon (CH)
(74) Vertreter: Gagel, Roland
(86) Internationale Anmeldenummer: PCT/DE2000/001477
(87) Internationale Veröffentlichungsnummer: WO 2000/070336

(56) Entgegenhaltungen:
- EP-A- 0 486 689
- US-A- 5 798 981
- PATENT ABSTRACTS OF JAPAN vol. 010, no. 294 (P-504), 7. Oktober 1986 (1986-10-07) & JP 61 111460 A (NIPPON STEEL CORP), 29. Mai 1986 (1986-05-29)

## Beschreibung

Die Erfindung betrifft ein Verfahren und eine Vorrichtung zur Zustandserfassung bzw. -überwachung und Prüfung von langgestreckten, aus mehreren Litzendrähten zusammengesetzten Verbindungselementen in Ankern und Brückenspanngliedern mittels Schall bzw. Ultraschall. Bei derartigen Systemen, die sich in den Bauwerken bereits im Einsatz befinden, ist der frühzeitige und zerstörungsfreie Nachweis von Fehlstellen, wie Rissen, Korrosionsstellen usw. von großer Bedeutung.

Eine Anwendung der aus der Materialprüfung bekannten Ultraschallimpuls-Messverfahren zur Ermittlung von Störstellen scheitert auf dem vorliegenden Gebiet der Anker und Brückenspannglieder aus Gründen der hohen Schallverluste in den Verbindungselementen.

Bei Freispielankern ist beispielsweise bekannt, dass 95% der Schäden an Spanngliedern direkt hinter dem Ankerkopf oder aber am Übergang von der freien zur festen Länge auftreten. Dieser Übergang kann sich mehrere Meter (10 m - 40 m) hinter dem Ankerkopf befinden. In der freien Länge sind die Anker in der Regel durch ein gefettetes Polyethylen-Rohr vor Korrosion geschützt. Das Fett koppelt jedoch einen großen Teil der Ultraschallenergie aus, so dass eine starke Schallschwächung resultiert. Ein ähnlicher Effekt tritt im hinteren eingemörtelten Teil der Anker auf.

Vollverbundanker sind auf der gesamten Länge eingemörtelt bzw. von Zement umgeben, so dass auch hier die Schallschwächung ein großes Problem darstellt.

Labor- und Feldversuche an Pilotobjekten mit elektrisch isolierten Spannkabeln zeigten unter anderem eindeutig, dass z.B. die Impulsspektroskopie RIMT zur zerstörungsfreien Prüfung injizierter Spannglieder nicht angewandt werden kann.
Die dem bisherigen technischen Stand entsprechende Ultraschallprüfung und die entsprechende Signalauswertung sind nicht in der Lage, Rückstreusignale von Fehlern, die sich z.B. am Übergang von der freien zur festen Länge befinden, mit dem zur Bewertung und Lokalisierung notwendigen hohen Rücksignal zu Rauschabstand zu erzeugen. Dies ist in erster Linie auf den oben dargelegten Umstand zurückzuführen, dass sich die zu prüfenden Seile, Drähte oder Litzen teilweise eingefettet in einer Polyethylen-Hülle befinden und/oder teilweise bzw. auf der gesamten Länge einzementiert sind, so dass bei der Schallfortpflanzung durch Abkopplung und Schallschwächung ein zu hoher Energieanteil verloren geht.

Für die Überprüfung dieser Verbindungselemente an Ankern und Brückenspanngliedern wurden daher andere Prüfverfahren in Erwägung gezogen.
So ist für neuere Bauwerke mit elektrisch isolierten Spannkabeln, ein Verfahren bekannt, mit dem über eine Widerstandsmessung der Kabel eine Globalinformation über den Korrosionsschutz der Spannglieder gewonnen werden kann. Diese Information sagt jedoch nichts über den Korrosionszustand selbst aus. Wenn die Widerstandsmessung eine Verletzung der Isolationsschicht vermuten lässt, so kann daraus nicht abgeleitet werden, ob tatsächlich Korrosion vorliegt.

Die US 5,798,981 beschreibt ein Verfahren und eine Vorrichtung zur Zustandserfassung langgestreckter Verbindungselemente in Ankern, bei dem ein Vibrationsimpuls in das Verbindungselement eingekoppelt und ein Antwortspektrum erfasst und untersucht wird. Bei diesem Verfahren wird ein Impuls definierter Stärke mit einer hammerartigen Vorrichtung in das Verbindungselement eingebracht. Aus dem erfassten Antwortspektrum der Schwingungen können Informationen über den Zustand des Verbindungselementes bzw. der Verankerung gewonnen werden. Die Auswertung eines derartigen Spektrums ist allerdings sehr aufwendig.

Die JP 61-111460 offenbart ein weiteres Verfahren zur Prüfung von Litzenseilen in einem Brückenspannglied, bei dem die einzelnen Litzenseile an einem Ende über einen Ultraschallprüfkopf mit einem Ultraschallimpuls beaufschlagt werden und die Impulsantwort empfangen und ausgewertet wird. Auf diese Weise kann ein unterbrochenes Litzenseil anhand des empfangenen Reflexionssignals erkannt werden.

Ein weiteres Verfahren und eine Vorrichtung zur Zustandserfassung und Prüfung von langgestreckten Verbindungselementen in Ankern ist in der WO 79/00929 beschrieben. Bei diesem Verfahren werden eine Ultraschallwelle an einem freien Ende des langgestreckten Verbindungselementes erzeugt und ausgesandt, von den Fehlstellen im Verbindungselement reflektierte Echowellen an dem freien Ende detektiert und Charakteristika der Fehlstellen des Verbindungselementes aus dem Messsignal ermittelt. Als Ultraschallwellen werden bei dieser Druckschrift Biegewellen mit definierten Wellenmoden eingekoppelt, da diese Biegewellen eine deutlich geringere Dämpfung und somit eine größere Reichweite aufweisen, als beispielsweise Longitudinalwellen. Die Anregung der Ultraschallwellen erfolgt bei dem System dieser Druckschrift mit einem Piezowandler.
Über das Ausmaß einer Schädigung im Verbindungselement lassen sich mit den genannten Verfahren jedoch keine Aussagen treffen.

Die Aufgabe der vorliegenden Erfindung besteht darin, ein Verfahren und eine Vorrichtung zur zerstörungsfreien Zustandserfassung und Prüfung von langgestreckten Verbindungselementen in Ankern und Brückenspanngliedern anzugeben, mit denen sich Fehlstellen wie Korrosionsschäden oder Risse derart lokalisieren lassen, dass eine Aussage über das Ausmaß der Schädigung getroffen werden kann.

Die Aufgabe wird mit dem Verfahren nach Anspruch 1 und der Vorrichtung nach Anspruch 14 gelöst. Vorteilhafte Ausgestaltungen des Verfahrens und der Vorrichtung sind Gegenstand der Unteransprüche.

Bei dem erfindungsgemäßen Verfahren werden mittels eines Schallwandlers (Sendewandler) geführte Wellen (z.B. Stabwellen, Oberflächenwellen, Torsionswellen) und/oder Volumenwellen am zugänglichen Ende der langgestreckten Verbindungselemente erzeugt, die sich in diesen fortpflanzen, an den vorhandenen Fehlstellen teilweise reflektiert und, je nach Ausgestaltung, entweder von einem Empfangswandler oder dem Sendewandler selbst wieder empfangen werden. Die langgestreckten Verbindungselemente, in der Regel Litzenseile, setzen sich in bekannter Weise aus mehreren Litzendrähten oder Gruppen von Litzendrähten bzw. Litzen zusammen.

Das Verfahren zeichnet sich dadurch aus, dass die Schall- und/oder Ultraschallwelle(n) im Verbindungselement entweder integral angeregt und litzendrahtselektiv empfangen oder litzendrahtselektiv angeregt und integral empfangen werden. Die empfangenen Reflexionssignale werden digitalisiert und anschließend bewertet.
Unter integraler Anregung oder integralem Empfang wird hierbei eine Anregung bzw. ein Empfang über den gesamten Querschnitt des Verbindungselementes verstanden. Litzendrahtselektive Anregung oder litzendrahtselektiver Empfang bedeutet eine selektive Anregung eines einzelnen Litzendrahtes oder einer einzelnen Gruppe aus der Gesamtheit von im Verbindungselement vorhandenen Litzendrähten, beispielsweise einer einzelnen Litze. Litzendrahtselektiver Empfang bedeutet entsprechend den Empfang der rückgestreuten Echosignale an einem einzelnen Litzendraht oder an einer einzelnen Gruppe von Litzendrähten.
Zur Erzeugung und zum Empfang der Wellen werden in der Vorrichtung speziell an die Verbindungselemente adaptierte elektromagnetische Wandler sowie gegebenenfalls Piezowandler und auch Kombinationen derselben eingesetzt.
Mit dem erfindungsgemäßen Verfahren und der zugehörigen Vorrichtung lassen sich in vorteilhafter Weise Fehlstellen wie Risse oder Korrosionsstellen an Litzenseilen von sich im Betrieb befindenden Ankern und Brückenspanngliedern zerstörungsfrei nachweisen. Mit dem Verfahren kann der Zustand dieser Verbindungselemente im Betrieb überwacht und eventuell vorhandene Fehlstellen können frühzeitig lokalisiert und bewertet werden. Gerade durch die litzendrahtselektive Prüfung und Auswertung bei Litzenseilen kann zudem bestimmt werden, ob es sich bei allfälliger Schädigung um abtragende Korrosion am gesamten Seil- bzw. Anker-Umfang handelt oder ob nur einzelne Litzen oder Litzendrähte betroffen sind.

Zur Detektion der Fehlstellen an den Verbindungselementen werden vorzugsweise Schall- und/oder Ultraschallwellen im Frequenzbereich zwischen 1 kHz und 5 MHz eingesetzt.

Der durch den Sendeimpuls an einem Prüfkopf mit elektromagnetischen sowie gegebenenfalls Piezo- oder kombiniertem Wandler erzeugte Schall- und/oder Ultraschallimpuls durchläuft in Form geführter Wellen die Seile, Litzen oder Drähte der Anker und Brückenspannglieder. An Fehlstellen wird ein Teil des Ultraschallimpulses reflektiert und läuft an den Seilen, Drähten oder Litzen entlang wieder zum empfangenden Wandler (elektromagnetischer, Piezo- oder kombinierter Wandler) zurück. Hier werden die Schwingungen vom Empfangswandler wieder in analoge, elektrische Signale umgewandelt und anschließend durch eine Elektronik digitalisiert. Durch einen geeigneten Algorithmus werden das Empfangssignal weiterverarbeitet und unter anderem Fehlstellen erkannt und bewertet. So kann beispielsweise aus der Laufzeit der Signale die Position der Fehler berechnet werden.

Das Verfahren erlaubt es, durch die Auswahl und Erzeugung von geeigneten Wellenmoden z.B. durch elektromagnetisch erzeugten Ultraschall, geführte Wellen zu erzeugen, die eine genügende Reichweite besitzen, um auch noch Fehler am Übergang von der freien zur festen Länge, innerhalb der festen Länge oder im Vollverbundanker zu erkennen.
Elektromagnetisch erzeugter Ultraschall hat z.T. jedoch den Nachteil eines schlechten Nahauflösungsvermögens, das durch den für die Anregung definierter Wellenmoden geeigneter Stärke erforderlichen langen schmalbandigen Sendeimpuls bedingt ist. Elektromagnetisch erzeugte Ultraschallwellen sind daher nur mit Einschränkung geeignet, um Fehler die sich direkt hinter dem Ankerkopf befinden, zu erkennen bzw. aufzulösen.

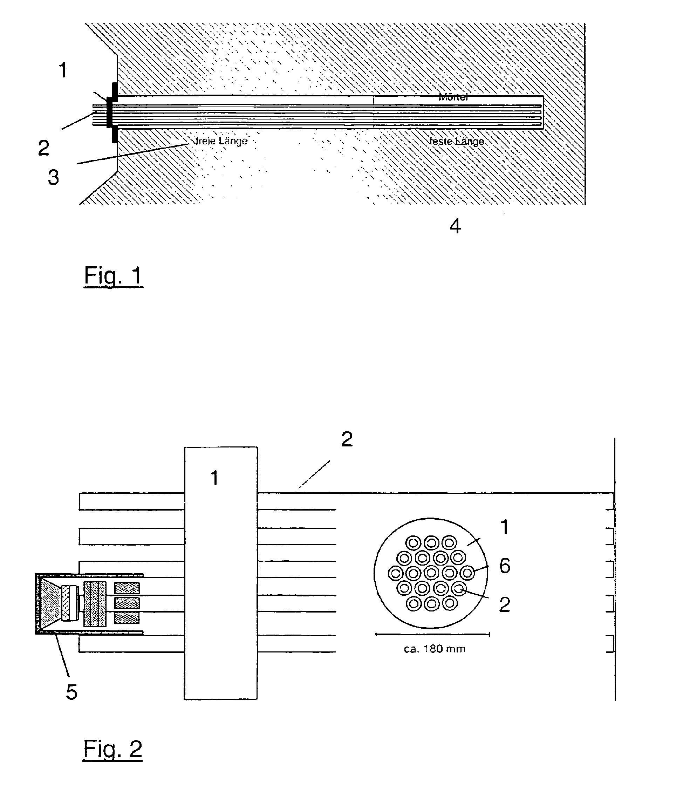

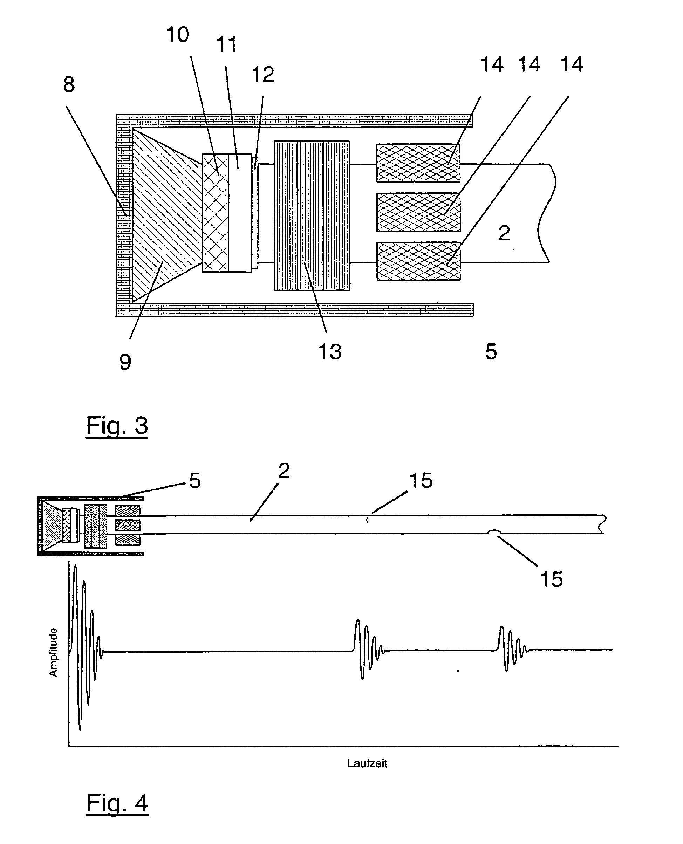

In einer bevorzugten Ausführungsform des Verfahrens wird deshalb je nach örtlichem Fehlererwartungsbereich teilweise ergänzend zu einem oder mehreren elektromagnetischen Wandlern mit piezokeramischen Wandlern (z.B. Kompositwandler) gearbeitet. Die verschiedenen Wandlertypen werden in Abhängigkeit der Fehlererwartung getrennt, getrennt in Abfolge nacheinander, frei kombiniert oder aber in einem kombinierten Prüfkopf eingesetzt (vgl. z.B. Fig.2 und Fig.3). So kann unter anderem ein stirnseitig angekoppelter piezokeramischer Wandler den ankerkopfnahen Bereich und ein das Seil umfassender elektromagnetischer wandler den ankerkopffernen Bereich des Ankers oder Brückenspanngliedes prüfen.

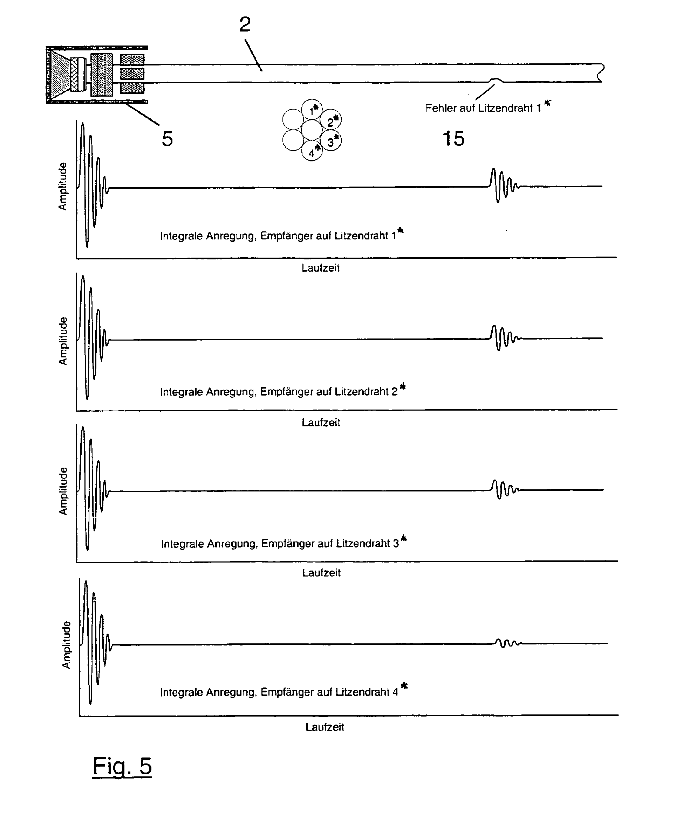

Mit dem erfindungsgemäßen Verfahren kann im Impuls-Echo-Modus oder im Sende-Empfangs-Modus gearbeitet werden. Im Impuls-Echo-Modus wird als Ultraschallsender und Ultraschallempfänger die selbe Wandlereinheit verwendet, im Sende-Empfangsmodus werden eine erste Wandlereinheit als Ultraschallsender und eine zweite als Ultraschallempfänger eingesetzt. Diese Anordnung erlaubt die integrale Anregung und den litzendrahtselektiven Empfang bzw. die litzendrahtselektive Anregung und den integralen Empfang (vgl. Fig. 5).

Die Anregung bzw. Erzeugung der Ultraschallwellenimpulse erfolgt einerseits ohne Koppelmittel elektromagnetisch. Bei den durch einen Kompositwandler erzeugten Ultraschallwellen kann diese über Luft, ein flüssiges oder gelartiges Koppelmittel oder über eine polymere Kopplungsschicht erfolgen.

Da die Kabelenden, welche aus dem Ankerkopf herausstehen oft korrodiert sind und keine ebene Ankopplungsfläche aufweisen, beinhaltet eine bevorzugte Ausführungsform des erfindungsgemäßen Verfahrens auch eine geeignete Vorbereitung der Kabelenden, bei der diese plangeschliffen und entrostet werden.
Auf die so vorbereiteten Kabelenden, kann die Wandlereinheit (z.B. der kombinierte Prüfkopf) nun definiert aufgesetzt werden. Dies ergibt unter anderem gleich bleibende Empfindlichkeit und ausreichende Reproduzierbarkeit.

Das erfindungsgemäße Verfahren arbeitet je nach Art des Ankers bzw. Spanngliedes mit unterschiedlichen Wellenmoden. Namentlich sind das Stabwellen, Oberflächenwellen, Torsionswellen oder Volumenwellen. Da mit mehreren Wandlern parallel oder sequentiell angeregt bzw. empfangen werden kann, ist auch eine Kombination unterschiedlicher Wellenmoden möglich.
Durch Kombination einer integralen (gesamtes Seil) Anregung oder eines integralen Empfangs mit einer litzendrahtselektiven Anregung bzw. einem litzendrahtselektiven Empfang ist es möglich, Fehlstellen bezüglich ihrer Art sowie das Schädigungsausmaß, d.h. ob nur einzelne Litzendrähte, Litzen oder das ganze Seil betroffen sind, genauer zu charakterisieren.

Die A/D-Wandlung des Messsignals erfolgt mit einer der Prüffrequenz angepassten Digitalisierungsrate (Nyquist-Theorem). Die Speichertiefe muss es erlauben, die der Laufzeit der interessierenden Ankerabschnitte entsprechenden Signallaufzeitbereiche /-längen zu digitalisieren.

Das erfindungsgemäße Verfahren ermöglicht es, die gefundenen Fehler so zu dokumentieren, dass bei einer späteren Untersuchung festgestellt werden kann, ob sich ein Fehler vergrößert hat oder ob sich neue Fehler gebildet haben. Weiterhin hat die Dokumentation auch die Aufgabe, die notwendigen Informationen darüber zu liefern, ob der Anker bzw. das Spannglied noch den Sicherheitsanforderungen genügt.

Die erfindungsgemäße Mess- bzw. Prüfvorrichtung enthält zumindest eine Schall- und/oder Ultraschallwandlereinheit zum Senden und/oder Empfangen. Bei einer einzigen Wandlereinheit muss diese sowohl senden als auch empfangen. Bei mehreren Wandlereinheiten kann das Senden und das Empfangen von getrennten Wandlereinheiten durchgeführt werden. Die zumindest eine Wandlereinheit ist so ausgestaltet, dass sie an einem freien Ende des langgestreckten Verbindungselementes angebracht werden kann, um eine definierte Wellenmode im Verbindungselement zu erzeugen. Die Wandlereinheit umfasst hierbei mehrere getrennt ansteuerbare elektromagnetische Schall- oder Ultraschallwandler, die derart angeordnet sind, dass sie im Messzustand zumindest in einer Ebene über den Umfang des Verbindungselementes verteilt sind. Diese Verteilung ist für die litzendrahtselektive Messung erforderlich. Die Vorrichtung enthält weiterhin eine Analog-Digital-Wandlereinheit zum Digitalisieren empfangener Echosignale und ein Mikroprozessorsystem mit einem Speicher für die Zwischenspeicherung und Verarbeitung der digitalisierten Signale.

Die einzelnen Komponenten sind auf das jeweilige aktuelle Messproblem optimiert. Nach Bedarf können eine Anzeigeeinheit, eine Eingabeeinheit und/oder eine Speichereinheit hinzukommen.

Die Erfindung wird nachfolgend anhand eines Ausführungsbeispiels in Verbindung mit den Zeichnungen nochmals erläutert. Hierbei zeigen
- Fig. 1: eine schematische Darstellung eines Litzenankers;
- Fig. 2: eine schematische Darstellung der möglichen Anordnung eines Ultraschall-Kombinationssensors an einem der Litzenseile im Ankerkopf für die Zustandsprüfung;
- Fig. 3: eine Detail-Darstellung eines Beispiels der Anordnung und des Aufbaues des erfindungsgemäßen Ultraschall-Kombinationssensors in einer Prüfkopfhalterung;
- Fig. 4: ein Beispiel für typische Mess-Signale von Echoimpulsen; und
- Fig. 5: ein Beispiel für typischen Messsignale bei Durchführung der litzendrahtselektiven Prüfung.

Figur 1 zeigt eine schematische Darstellung eines in einem Fels 3 verankerten Litzenankers, an dem der Zustand der Litzenseile 2 überprüft werden soll. Der Anker besteht aus dem Ankerkopf 1, in dem die Litzenseile 2 eingespannt sind. Die Litzenseile stehen an dem ankerkopfseitigen Ende aus diesem heraus (freies Ende) und sind an ihrem gegenüberliegenden Ende über eine bestimmte Länge (sog. feste Länge) in der Felsbohrung eingemörtelt. Zwischen dem Ankerkopf 1 und diesem eingemörtelten Bereich 4 liegt die sog. freie Länge, über die sich die Litzenseile frei erstrecken. Der Übergangsbereich im Litzenseil von der freien zur festen Länge stellt einen für Fehlstellen anfälligen Bereich dar. In Figur 2 ist auf der rechten Seite der Ankerkopf 1 nochmals in Draufsicht mit den Litzenseilen 2, die den Ankerkopf in konischen Bohrungen durchlaufen, dargestellt.

Figur 2 zeigt weiterhin eine schematische, vergrößerte Ansicht eines Ankerkopfes 1 mit Litzenseilen 2. Auf das freie Ende eines Litzenseiles 2 ist hierbei ein Prüfkopf 5 aufgesetzt, mit dem der Zustand des Litzenseiles 2 mit dem erfindungsgemäßen Verfahren festgestellt werden kann.

Ein Beispiel für den Prüfkopf 5 ist im Detail in Figur 3 dargestellt. Es handelt sich hierbei um einen Ultraschall-Kombinationssensor in einer Prüfkopfhalterung 8. Der Prüfkopf umfasst einen Piezo/Kompositwandler 11, der über eine Dämpfungsmasse 10 auf einem Permanentmagneten 9 aufgebracht ist (hier nur schematisch dargestellt). Der Permanentmagnet wird hierbei möglichst nahe an der Stirnseite des Litzenseiles 2 angeordnet. In Fällen, in denen kein Piezowandler eingesetzt wird, liegt der Permanentmagnet vorzugsweise direkt an der Stirnseite an.
Die vom Piezowandler erzeugte Ultraschallwelle wird über ein Koppelmedium 12 in die Stirnseite des Litzenseiles 2 eingekoppelt. Das Litzenseil 2 wird weiterhin im Messzustand von einem im Prüfkopf vorgesehenen elektromagnetischen Wandler 13 umschlossen, der der integralen Anregung und/oder dem integralen Empfang von Schall- bzw. Ultraschallwellen dienen kann. Zusätzlich sind mehrere weitere elektromagnetische Wandler 14 im dem Prüfkopf derart angeordnet, dass sie im Messzustand über den Umfang des Litzenseiles 2 verteilt sind (vgl. Figur 3), um auf diese Weise der litzendrahtselektiven Anregung und/oder dem litzendrahtselektiven Empfang der Schall- bzw. Ultraschallwellen zu dienen.

Im erfindungsgemäßen Messverfahren wird mindestens eine Schall- und/oder Ultraschallwelle von einem Gerät wie beispielsweise dem in Figur 3 dargestellten Prüfkopf via Sendewandler ausgesandt. An Fehlstellen des Messobjektes reflektierte Echowellen werden vom Messgerät via Empfangswandler als Messsignal detektiert. Dieses Messsignal wird digitalisiert und weiterverarbeitet. Aus der Laufzeit der Messsignale wird die Distanz des Fehlers vom Ankerkopf berechnet.

Figur 4 zeigt ein Beispiel für typische Mess-Signale von Echoimpulsen, wie sie beispielsweise an einem Litzenseil 2 mit zwei Fehlern 15, wie im oberen Teil der Figur dargestellt, gemessen werden. Die nach der Reflexion an den Fehlstellen am Empfänger registrierten Amplituden der Echosignale sind, in Abhängigkeit von der Laufzeit, in der Figur zu erkennen. Aus der Laufzeit kann dann auf den Ort der Fehlstellen im Litzenseil 2 geschlossen werden.

Figur 5 zeigt schließlich die verfeinerte Technik gemäß der vorliegenden Erfindung, mit der ermittelt werden kann, ob sich eine Fehlstelle über das gesamte Litzenseil 2 erstreckt oder ob lediglich einzelne Litzen oder Litzendrähte (1*, 2*, 3*, 4*, ...) des Litzenseiles 2 betroffen sind. Insbesondere lässt sich mit diesem Verfahren feststellen, auf welchem der Litzen oder Litzendrähte innerhalb des Litzenseiles 2 eine Fehlstelle vorliegt.

Im oberen Bereich der Figur ist hierbei wieder ein Litzenseil 2 mit dem aufgesetzten Prüfkopf 5 zu erkennen. Innerhalb des Litzenseiles liegt eine Fehlstelle 15 auf dem Litzendraht 1* vor (vgl. Draufsicht auf das Litzenseil 2 mit den Litzendrähten 1*, 2*, 3*, 4*, ...). Bei dem Verfahren erfolgt zunächst eine integrale Anregung des gesamten Litzenseils 2. Die Echosignale werden jedoch für jeden der einzelnen Litzendrähte getrennt empfangen. Aus einem Vergleich der Amplituden der jeweils bei der gleichen Laufzeit empfangenen Echosignale kann so der Litzendraht ermittelt werden, auf dem die Fehlstelle liegt (hier: Litzendraht 1* mit der höchsten Amplitude).

## Patentansprüche

1. Verfahren zur Zustandserfassung und Prüfung von langgestreckten, aus mehreren Litzendrähten (1*,2*,3*,4*,..) zusammengesetzten Verbindungselementen (2) in Ankern und Brückenspanngliedern, bei dem mindestens eine Schall- oder Ultraschallwelle an einem freien Ende des langgestreckten Verbindungselementes (2) mit einer definierten Wellenmode erzeugt und ausgesandt wird, von Fehlstellen (15) im Verbindungselement (2) reflektierte Echowellen als Messsignal (A(t)) an dem freien Ende detektiert werden und Charakteristika der Fehlstellen (15) des Verbindungselementes (2) aus dem Messsignal ermittelt werden, indem das Messsignal digitalisiert und ausgewertet wird,
**dadurch gekennzeichnet,**
**dass** die Schall- und/oder Ultraschallwelle(n) im Verbindungselement (2) integral angeregt und litzendrahtselektiv empfangen oder litzendrahtselektiv angeregt und integral empfangen werden.

2. Verfahren nach Anspruch 1,
**dadurch gekennzeichnet,**
**dass** zur Minimierung der Abkopplung von Schallenergie in ein das Verbindungselement (2) umgebendes Material, insbesondere in Fett, in eine PE-Hülle oder in Mörtel, Wellenmoden eingesetzt werden, deren Phasengeschwindigkeit geringer ist als die der Longitudinal- und Transversalwellengeschwindigkeit des das Verbindungselement (2) umgebenden Materials.

3. Verfahren nach Anspruch 1 oder 2,
**dadurch gekennzeichnet,**
**dass** die Schall- und/oder Ultraschallwellen durch einen oder mehrere elektromagnetische Wandler (13, 14) erzeugt bzw. empfangen werden.

4. Verfahren nach Anspruch 1 oder 2,
**dadurch gekennzeichnet,**
**dass** die Schall- und/oder Ultraschallwellen durch einen oder mehrere piezokeramische Wandler (11) erzeugt bzw. empfangen werden.

5. Verfahren nach Anspruch 1 oder 2,
**dadurch gekennzeichnet,**
**dass** die Schall- und/oder Ultraschallwellen durch einen oder mehrere piezokeramische Wandler (11) erzeugt und einen oder mehrere elektromagnetische Wandler (13, 14) empfangen werden.

6. Verfahren nach Anspruch 1 oder 2,
**dadurch gekennzeichnet,**
**dass** die Schall- und/oder Ultraschallwellen durch einen oder mehrere elektromagnetische Wandler (13, 14) erzeugt und durch einen mehrere piezokeramische Wandler (11) empfangen werden.

7. Verfahren nach einem der Ansprüche 4 bis 6,
**dadurch gekennzeichnet,**
**dass** die Schall- und/oder Ultraschallwellen über einen Luftspalt zwischen dem piezokeramischen Wandler (11) und dem freien Ende des Verbindungselementes (2) in das Verbindungselement (2) ein- bzw. aus diesem ausgekoppelt werden.

8. Verfahren nach einem der Ansprüche 4 bis 6,
**dadurch gekennzeichnet,**
**dass** die Schall- und/oder Ultraschallwellen über mindestens einen Flüssigkeitsstrahl zwischen dem piezokeramischen Wandler (11) und dem freien Ende des Verbindungselementes (2) in das Verbindungselement (2) ein- bzw. aus diesem ausgekoppelt werden.

9. Verfahren nach einem der Ansprüche 4 bis 6,
**dadurch gekennzeichnet,**
**dass** die Schall- und/oder Ultraschallwellen über mindestens ein polymeres Kontaktmedium zwischen dem piezokeramischen Wandler (11) und dem freien Ende des Verbindungselementes (2) in das Verbindungselement (2) ein- bzw. aus diesem ausgekoppelt werden.

10. Verfahren nach einem der Ansprüche 1 bis 9,
**dadurch gekennzeichnet,**
**dass** in dem Verbindungselement (2) sowohl langreichweitige als auch kurzreichweitige Ultraschall-Wellen erzeugt und deren Echosignale ausgewertet werden.

11. Verfahren nach einem der Ansprüche 1 bis 10,
**dadurch gekennzeichnet,**
**dass** in dem Verbindungselement (2) langreichweitige geführte Ultraschall-Stabwellen erzeugt werden.

12. Verfahren nach einem der Ansprüche 1 bis 11,
**dadurch gekennzeichnet,**
**dass** eine Korrelation von mit verschiedenen Wellenmoden oder Anregungsverfahren erhaltenen Daten durchgeführt wird, um die Sicherheit der Prüfaussage zu verbessern.

13. Verfahren nach einem der Ansprüche 1 bis 12,
**dadurch gekennzeichnet,**
**dass** die Messresultate so dokumentiert werden, dass bei einer späteren Prüfung Veränderungen festgestellt werden können.

14. Vorrichtung zur Zustandserfassung und Prüfung von langgestreckten, aus mehreren Litzendrähten (1*, 2*,3*,4*,..) zusammengesetzten Verbindungselementen in Ankern und Brückenspanngliedern,
die zumindest umfasst:
- eine Schall- oder Ultraschallwandlereinheit (11, 13) zum Senden und/oder Empfangen, die so ausgestaltet ist, dass sie an einem freien Ende des langgestreckten Verbindungselementes (2) angebracht werden kann, um eine definierte Wellenmode im Verbindungselement (2) zu erzeugen und/oder zu empfangen,
- eine Analog-Digital-Wandlereinheit zum Digitalisieren empfangener Echosignale und
- ein Mikroprozessorsystem mit einem Speicher für die Zwischenspeicherung und Verarbeitung der digitalisierten Signale,
**dadurch gekennzeichnet,**
**dass** die Wandlereinheit getrennt ansteuerbare elektromagnetische Schall- oder Ultraschallwandler (14) umfasst, die im Messzustand zumindest in einer Ebene über den Umfang des Verbindungselementes (2) verteilt sind, damit die Schall- oder Ultraschallwelle(n) im Verbindungselement (2) integral angeregt und litzendrahtselektiv empfangen, oder litzendrahtselektiv angeregt und integral empfangen werden.

15. Vorrichtung nach Anspruch 14,
**dadurch gekennzeichnet,**
**dass** die Wandlereinheit weiterhin einen elektromagnetischen Wandler (13) umfasst, der das Verbindungselement (2) im Messzustand in einer Ebene umschließt.

16. Vorrichtung nach Anspruch 14 oder 15,
**dadurch gekennzeichnet,**
**dass** die Wandlereinheit weiterhin einen Piezowandler (11) umfasst, der im Messzustand an der Stirnseite des Verbindungselements (2) angeordnet ist.

## Claims

1. A method for the status recording and testing of elongated connection elements (2) composed of a plurality of braided wires (1*, 2*, 3*, 4*, ...) in armatures and bridge clamping elements, wherein at least one sound or ultrasonic wave is generated and transmitted at one free end of the elongated connecting element (2) with a defined wave mode, echo waves reflected from flaws (15) in the connecting element (2) are detected as a measuring signal (A(t)) at the free end, and in that characteristics of the flaws (15) of the connecting element (2) are determined from the measuring signal by digitalising and evaluating the measuring signal, **characterised in that** the sound and/or ultrasonic wave(s) in the connecting element (2) are integrally excited and braid wire selectively received or braided wire selectively excited and integrally received.

2. The method according to Claim 1, **characterised in that** in order to minimise the disconnection of sound energy wave modes are inserted in a material surrounding the connecting element(2), in particular in grease, in a PE envelope or in mortar, the phase displacement of which wave modes is smaller than that of the longitudinal and transversal wave speed of the material surrounding the connecting element (2).

3. The method according to Claim 1 or 2, **characterised in that** the sound and/or ultrasonic weaves are generated and received by one or a plurality of electromagnetic converters (13, 14).

4. The method according to Claim 1 or 2, **characterised in that** the sound and/or ultrasonic waves are generated or received by one or a plurality of piezoceramic converters (11).

5. The method according to Claim 1 or 2, **characterised in that** the sound and/or ultrasonic waves are generated by one or a plurality of piezoceramic converters (11) and are received by one or a plurality of electromagnetic converters (13, 14).

6. The method according to Claim 1 or 2, **characterised in that** the sound and/or ultrasonic waves are generated by one or a plurality of electromagnetic converters (13, 14) and are received by one or a plurality of piezoceramic converters (11).

7. The method according to any one of Claims 4 to 6, **characterised in that** the sound and/or ultrasonic waves are connected to the connecting element (2) or disconnected from it by means of an air gap between the piezoceramic converter (11) and the free end of the connecting element (2).

8. The method according to any one of Claims 4 to 6, **characterised in that** the sound and/or ultrasonic waves are connected to the connecting element (2) or disconnected from it by means of at least one liquid jet between the piezoceramic converter (11) and the free end of the connecting element (2).

9. The method according to any one of Claims 4 to 6, **characterised in that** the sound and/or ultrasonic waves are connected to the connecting element (2) or disconnected from it by means of at least one polymeric medium between the piezoceramic converter (11) and the free end of the connecting element (2).

10. The method according to any one of Claims 1 to 9, **characterised in that** long-range and short-range ultrasonic waves are generated and their echo signals evaluated in the connecting element (2).

11. The method according to any one of Claims to 10, **characterised in that** long-range guided ultrasonic rod waves are generated in the connecting element (2).

12. The method according to any one of Claims 1 to 11, **characterised in that** a correlation of data obtained with different wave modes or excitation methods is carried out in order to improve the certainty of the test statement.

13. The method according to any one of Claims 1 to 12, **characterised in that** the measuring results are documented so that variations can be established in a later test.

14. A device for the status recording and testing of elongated connecting elements in armatures and bridge clamping elements composed of a plurality of braided wires (1*, 2*, 3*, 4*, ..), which device comprises at least:
- a sound or ultrasonic converter unit (11, 13) for transmitting and/or receiving, which is designed so that it can be fitted to a free end of the elongated connecting element (2) in order to generate and/or receive a defined wave mode in the connecting element (2),
- an analogue-digital converter unit for digitalising received echo signals, and
- a microprocessor system with a memory for the intermediate storage and processing of the digitalised signals,
**Characterised in that** the converter unit comprises electromagnetic sound or ultrasonic converters (14) that can be separately actuated, which converters, in the measuring condition, are distributed in one plane around the periphery of the connecting element (2) so that the sound or ultrasonic wave(s) is/are integrally excited and braided wire selectively received or are braided wire selectively excited and integrally received in the connecting element (2).

15. The device according to Claim 14, **characterised in that** the converter unit further comprises an electromagnetic converter (13) which surrounds the connecting element (2) in the measuring condition in one plane.

16. The device according to Claim 14 or 15, **characterised in that** the converter unit further comprises a piezoconverter (11) which, in the measuring condition, is arranged on the front side of the connecting element (2).

## Revendications

1. Procédé d'enregistrement de l'état et de contrôle d'éléments de liaison (2) étirés en longueur et composés de plusieurs fils de torons (1*, 2*, 3*, 4*, ...) dans des ancrages et éléments tendeurs de ponts, dans lequel, à une extrémité libre de l'élément de liaison étiré en longueur (2), est générée et envoyée avec un mode d'onde défini au moins une onde sonore ou ultrasonore, des ondes d'écho (A(t)) reflétées par des vides (15) de l'élément de liaison (2) sont détectées comme signal de mesure (A(t)) à l'extrémité libre et des caractéristiques des vides (15) de l'élément de liaison (2) sont déterminées à partir du signal de mesure en numérisant et en exploitant le signal de mesure,
**caractérisé en ce que**
l'onde(les ondes) sonore(s) et/ou ultrasonore(s) dans l'élément de liaison (2) est(sont) excitée(s) de manière intégrale et reçues sélectivement par fil de toron ou excitée(s) sélectivement par fil de toron et reçue(s) de manière intégrale.

2. Procédé selon la revendication 1,
**caractérisé en ce que**,
pour minimiser la sortie de l'énergie sonore dans une matière entourant l'élément de liaison (2), notamment dans de la graisse, dans une gaine de PE ou dans du mortier, on utilise des modes d'ondes dont la vitesse de phase est plus faible que la vitesse d'onde longitudinale et transversale de la matière entourant l'élément de liaison (2).

3. Procédé selon la revendication 1 ou 2,
**caractérisé en ce que**
les ondes sonores et/ou ultrasonores sont générées ou reçues par un ou plusieurs convertisseurs électromagnétiques (13, 14).

4. Procédé selon la revendication 1 ou 2,
**caractérisé en ce que**
les ondes sonores et/ou ultrasonores sont générées ou reçues par un ou plusieurs convertisseurs piézocéramiques (11).

5. Procédé selon la revendication 1 ou 2,
**caractérisé en ce que**
les ondes sonores et/ou ultrasonores sont générées par un ou plusieurs convertisseurs piézocéramiques (11) et reçues par un ou plusieurs convertisseurs électromagnétiques (13, 14).

6. Procédé selon la revendication 1 ou 2,
**caractérisé en ce que**
les ondes sonores et/ou ultrasonores sont générées par un ou plusieurs convertisseurs électromagnétiques (13, 14) et reçues par un ou plusieurs convertisseurs piézocéramiques (11).

7. Procédé selon une des revendications 4 à 6,
**caractérisé en ce que**
les ondes sonores et/ou ultrasonores sont incorporées dans l'élément de liaison (2) ou en sortent par un intervalle d'air entre le convertisseur piézocéramique (11) et l'extrémité libre de l'élément de liaison (2).

8. Procédé selon une des revendications 4 à 6,
**caractérisé en ce que**
les ondes sonores et/ou ultrasonores sont incorporées dans l'élément de liaison (2) ou en sortent par au moins un jet de liquide entre le convertisseur piézocéramique (11) et l'extrémité libre de l'élément de liaison (2).

9. Procédé selon une des revendications 4 à 6,
**caractérisé en ce que**
les ondes sonores et/ou ultrasonores sont incorporées dans l'élément de liaison (2) ou en sortent par au moins un fluide de contact à base de polymère entre le convertisseur piézocéramique (11) et l'extrémité libre de l'élément de liaison (2).

10. Procédé selon une des revendications 1 à 9,
**caractérisé en ce que**,
dans l'élément de liaison (2), aussi bien des ondes d'ultrasons à longue portée qu'à courte portée sont générées et que leurs signaux d'écho sont exploités.

11. Procédé selon une des revendications 1 à 10,
**caractérisé en ce que**,
dans l'élément de liaison (2), sont générées des ondes en bâton guidées à longue portée.

12. Procédé selon une des revendications 1 à 11,
**caractérisé en ce que**
une corrélation de données obtenues avec différents modes d'ondes ou procédés d'excitation est établie afin d'améliorer la sécurité de la déclaration de contrôle.

13. Procédé selon une des revendications 1 à 12,
**caractérisé en ce que**
les résultats de mesure sont documentés de manière à ce que les changements puissent être détectés lors d'un prochain contrôle.

14. Dispositif d'enregistrement de l'état et de contrôle d'éléments de liaison (2) étirés en longueur et composés de plusieurs fils de torons (1*, 2*, 3*, 4*, ...) dans des ancrages et éléments tendeurs de ponts, comprenant au moins :
- une unité de conversion de sons ou d'ultrasons (11, 13) pour l'émission et/ou la réception qui est conçue pour pouvoir être installée à une extrémité libre de l'élément de liaison étiré en longueur (2) afin de générer et/ou de recevoir un mode d'ondes défini dans l'élément de liaison (2),
- une unité de conversion analogique-numérique pour la numérisation des signaux d'écho reçus et
- un système de microprocesseur avec une mémoire pour la sauvegarde provisoire et le traitement des signaux numérisés,
**caractérisé en ce que**
l'unité de conversion comporte des convertisseurs électromagnétiques de sons ou d'ultrasons (14) contrôlables séparément qui sont répartis en position de mesure au moins dans un plan sur la circonférence de l'élément de liaison (2) afin que l'onde(les ondes) sonore(s) ou ultrasonore(s) dans l'élément de liaison (2) soit(soient) excitée(s) de manière intégrale et reçue(s) de manière sélective par toron ou excitée(s) de manière sélective par toron et reçue(s)de manière intégrale.

15. Dispositif selon la revendication 14,
**caractérisé en ce que**
l'unité de conversion comprend en outre un convertisseur électromagnétique (13) qui, en position de mesure, encercle l'élément de liaison (2) dans un plan.

16. Dispositif selon la revendication 14 ou 15,
**caractérisé en ce que**
l'unité de conversion comprend en outre un piézoconvertisseur (11) qui, en position de mesure, est disposé sur la face frontale de l'élément de liaison (2).
